# EUROPEAN PATENT APPLICATION

(11) **EP 3 566 862 A1**
(43) Date of publication of application: **13.11.2019**
(21) Application number: 18175303.9
(22) Date of filing: 31.05.2018
(51) Int. Cl.: B32B 5/02, B32B 27/12, B32B 27/40, B32B 3/30, D06N 3/14, B32B 37/00

(54) **STRATIFIED COMPOSITE MATERIAL AND PROCESS FOR OBTAINING IT**

(30) Priority: 11.05.2018 IT 201800005301
(71) Applicant: Lorenzi S.r.l., 35010 Vigonza (PD) (IT)
(72) Inventor: LORENZI, Lorenzo, 35010 VIGONZO (PD) (IT)
(74) Representative: Morabito, Sara

(57) **Abstract**

Stratified composite material specifically suited to be used for producing footwear, leather items, furnishing elements or objects, clothing items, comprising at least two layers, a first supporting layer and a second covering layer coupled with said first supporting layer, and wherein said second covering layer is made of polyurethane and is obtained by spraying two-component polyurethane on at least one matrix and is successively coupled with said first supporting layer. The present patent concerns also the process for obtaining said material.

## Description

The present patent concerns stratified materials, and more specifically it concerns a new stratified material, intended especially for the production of footwear, leather items, furnishing elements or objects, clothing items. The present invention concerns also the process for obtaining said stratified material.

Stratified materials are known, which are obtained by coupling two or more layers of identical or different materials.

Coupled and/or stratified fabrics are known, which are obtained by joining two fabrics with the aim to exploit the individual characteristics of each one of said fabrics.

For example, a first fabric is intended to be used on the inside of a clothing item and is suited to maintain a constant body temperature, while a second fabric is intended to be used on the outside of a clothing item and is suited to allow transpiration while at the same time guaranteeing impermeability.

Coupled materials are also known in which one of the layers can serve to strengthen the material itself and/or to add to its aesthetic value and/or to protect it from abrasion or wear, etc.

The subject of the present invention is a new stratified composite material, specifically intended to be used for the production of footwear, leather items, furnishing objects or elements, clothing items. The present invention concerns also the process for obtaining said stratified material.

One of the objects of the invention is to provide a new stratified material featuring high mechanical resistance, more specifically resistance to abrasion.

The present invention offers the advantage that the new material can be used for several possible applications, thanks to its three-dimensional shape, which also improves its aesthetic value.

It is an important object of the present invention to make it possible to increase the use of materials derived from renewable sources.

These and other direct and complementary objects are achieved by the new stratified composite material comprising at least two layers, a first supporting layer and a second covering layer, wherein said second covering layer is made of polyurethane, is obtained by means of a process defined as "bycast", that is, by spraying two-component polyurethane on at least one matrix, and is successively coupled with said first supporting layer.

The final thickness of the product, including the supporting layer and the covering layer, is preferably included between 0.3 mm and 2.2 mm.

In greater detail, said first supporting layer can be made of fabric or a material derived from cellulose or a polyamide microfiber coagulated with polyurethane, the preferred composition of which is 50% PA and 50% PU.

Said second covering layer, instead, is preferably constituted by 100% polyurethane, wherein the polyurethane used is obtained from the reaction of the reactive components - isocyanate and polyol-, and wherein said polyol is partially derived from a renewable source such as wheat and rye.

The process for obtaining the new stratified material comprises the following steps:
1. preparation of said first supporting layer;
2. spraying the reactive components - isocyanate and polyol - on one or more matrices;
3. coupling said first supporting layer with said second covering layer; the support is pressed by means of metallic cylinders and placed in contact with the reactive two-component polyurethane arranged on the matrix, so that this contact produces the coupling between the two layers;
4. separation of said covering layer from said matrix.

Said one or more matrices are preferably silicone-based and their surface geometry is the geometry to be obtained on the finished product.

During said spraying step, polyol is sprayed on said one or more matrices together and simultaneously with isocyanate.

Said polyol is conveniently at least partially derived from a renewable source. More specifically and preferably, the quantity in weight of said portion derived from a renewable source compared to the total quantity of polyol is higher than 65%, so that said covering layer comprises a quantity of polyol derived from a renewable source equal to approximately 50-60%.

The stratified material obtained from the new process is highly resistant to abrasion and furthermore has also a high aesthetic value, owing to its three-dimensional shape, which is obtained by spraying the reactive components on the matrices.

The material obtained in this way is thus especially suited to be used in the sector of footwear, leather items, furniture, clothing items.

These are the schematic outlines which are sufficient for a person skilled in the art to carry out the invention, consequently during the practical application of the invention changes may be made that do not affect the substance of the innovative concept disclosed herein.

Therefore, with reference to the preceding description, the following claims are expressed.

## Claims

1. Stratified composite material specifically suited to be used for producing footwear, leather items, furnishing elements or objects, clothing items, comprising at least two layers, a first supporting layer and a second covering layer coupled with said first supporting layer, and wherein said second covering layer is made of polyurethane and is obtained by spraying two-component polyurethane on at least one matrix and successively coupled with said first supporting layer.

2. Stratified material according to claim 1, **characterized in that** said first supporting layer is made of fabric or a material derived from cellulose or polyamide microfiber coagulated with polyurethane.

3. Stratified material according to claim 2, **characterized in that** said first supporting layer is made of microfiber with composition consisting of 50% PA and 50% PU.

4. Stratified material according to claim 1, **characterized in that** said second covering layer is made of 100% polyurethane, wherein the polyurethane used is obtained from the reaction of the reactive components - isocyanate and polyol-, and wherein said polyol is partially derived from a renewable source.

5. Process for obtaining a stratified material, **characterized in that** it comprises the following steps:
• preparing a first supporting layer;
• spraying the reactive components - isocyanate and polyol - on one or more matrices so as to form a second covering layer made of 100% polyurethane;
• coupling said first supporting layer with said second covering layer;
• separating said covering layer from said matrix.

6. Process according to the preceding claim, **characterized in that** said coupling step is performed by pressing said supporting layer so as to place it in contact with a layer of reactive polyurethane material arranged on said matrix, wherein said contact produces the coupling between the two layers.

7. Process for obtaining a stratified material according to claim 5, **characterized in that** the surface geometry of said one or more matrices is the geometry to be obtained on the finished product.

8. Process for obtaining a stratified material according to any of the claims from 5 to 7, **characterized in that** said one or more matrices are made of silicone.

9. Process for obtaining a stratified material according to claim 5, **characterized in that** during said spraying step polyol is sprayed on said one or more matrices together and simultaneously with isocyanate.

10. Process for obtaining a stratified material according to claim 5, **characterized in that** said polyol is at least partially derived from a renewable source, and wherein the quantity in weight of said portion derived from a renewable source compared to the total quantity of polyol is higher than 65%, so that said covering layer comprises a quantity of polyol derived from a renewable source equal to approximately 50-60%.
